**Europäisches Patentamt**

**European Patent Office**

**Office européen des brevets**

(19)

(11) Veröffentlichungsnummer: **0 065 636**
A1

(12) # EUROPÄISCHE PATENTANMELDUNG

(21) Anmeldenummer: 82102881.8

(22) Anmeldetag: 05.04.82

(51) Int. Cl.³: **H 04 K 1/04**

(30) Priorität: 22.05.81 DE 3120357

(43) Veröffentlichungstag der Anmeldung:
01.12.82 Patentblatt 82/48

(84) Benannte Vertragsstaaten:
BE CH DE FR GB IT LI LU NL SE

(71) Anmelder: Licentia Patent-Verwaltungs-GmbH
Theodor-Stern-Kai 1
D-6000 Frankfurt/Main 70(DE)

(72) Erfinder: Scheuermann, Helmut, Dipl.-Ing.
Schöntaler Strasse 55
D-7150 Backnang(DE)

(74) Vertreter: Schickle, Gerhard, Dipl.-Ing. et al,
Licentia Patent-Verwaltungs-GmbH Theodor-Stern-Kai
1
D-6000 Frankfurt/Main 70(DE)

(54) **Verfahren zur Vertauschung von n Teilbändern.**

(57) Die Erfindung betrifft ein Verfahren zur Vertauschung von n Teilbändern der Frequenzbreite b eines Signalfrequenzbandes mit der unteren und oberen Grenzfrequenz fu und fo und ist dadurch gekennzeichnet, daß das Signalfrequenzband mit der Eingangsabtastrate fa abgetastet wird, daß die n Teilbänder aus dem Signalfrequenzband separiert und jeweils in einen bestimmten Frequenzbereich umgesetzt werden, indem stufenweise mittels Hoch-/Tiefpaß-Weichen (HT) gefiltert und die Abtastrate reduziert wird (⊕), daß die Teilbänder anschließend mittels einer von einem Zufallsgenerator gesteuerten Koppelmatrix verwürfelt (Verwürfelungsmatrix) und spektral wieder zur Breite des Signalfrequenzbandes zusammengefaßt werden.

Das erfindungsgemäße Verfahren läßt sich vorteilhaft zur verschleierten Übertragung von Nachrichtensignalen einsetzen und benötigt dazu keine Modulatoren. Es verwendet Weichenfilter, die völlig gleich aufgebaut sind und nur bei unterschiedlichen Abtastraten betrieben werden.

EP 0 065 636 A1

./...

FIG.1

- 1 -

Licentia Patent-Verwaltungs-GmbH     Z13 PTL-BK/Ruf/wei
Theodor-Stern-Kai 1                   BK 80/62
D-6000 Frankfurt 70

## Verfahren zur Vertauschung von n Teilbändern

Die Erfindung betrifft ein Verfahren zur Vertauschung von n Teilbändern eines Signalfrequenzbandes gemäß Oberbegriff des Hauptanspruchs.

Solche Verfahren sind bekannt, beispielsweise durch die DE-OS 26 52 607. Bei der Frequenzbandvertauschung wird sendeseitig das Signalfrequenzband in eine Anzahl gleich breiter Teilbänder unterteilt, die mittels Frequenzumsetzer vertauscht werden. Die Vertauschung wird durch einen Quasi-Zufallsgenerator gesteuert. Empfangsseitig wird die Vertauschung rückgängig gemacht mit Hilfe eines Generators, der die gleiche Quasi-Zufallsfolge liefert.

Bei dem vorbekannten Bandvertauschungsverfahren werden jeweils Modulatoren benötigt.

Aufgabe der vorliegenden Erfindung war es, ein Bandvertauschungsverfahren anzugeben, das ohne Modulatoren auskommt und in unaufwendiger Weise eine Anzahl gleicher oder gleichartiger Bausteine verwenden kann.

Die Lösung erfolgt mit den in den Patentansprüchen angegebenen Mitteln.

Das erfindungsgemäße Verfahren läßt sich vorteilhaft zur verschleierten Übertragung von Nachrichtensignalen einsetzen und benötigt dazu keine Modulatoren. Es verwendet Weichenfilter, die völlig gleich aufgebaut sind und nur bei unterschiedlichen Abtastraten betrieben werden.

Durch Mehrfachausnutzung (Multiplexbetrieb) ist es möglich, mit einem einzigen realisierten Weichenfilter auszukommen, was Platzersparnis und Verlustleistungsarmut bedeutet.

Durch jeweilige Anpassung der Abtastrate an den durch das Abtasttheorem vorgegebenen Wert in den Stufen erreicht man eine Signalverarbeitungsgeschwindigkeit, die nahezu dem theoretischen Minimum entspricht. Daraus resultiert ein geringerer Schaltungsaufwand als bei herkömmlichen Lösungen.

Das erfindungsgemäße Verfahren ist sowohl für zeitdiskrete als auch für digitale Signalverarbeitung geeignet.

Bei Verwendung von Wellendigitalfiltern wird der Schaltungsaufwand besonders günstig, da bei diesen Filtern von Natur aus bereits Weichenverhalten vorliegt.

In einer weiteren Ausgestaltung der Erfindung liegen die Weichenübergänge jeweils bei einem Viertel der jeweiligen Abtastrate; hier lassen sich die Vorteile bestimmter Strukturen von Wellendigitalfiltern ausnutzen, was zusätzlich auf einen besonders günstigen Realisierungsaufwand führt.

Es erfolgt nun eine Beschreibung des erfindungsgemäßen Verfahrens anhand der Figuren.

Die Fig. 1 zeigt das Prinzip des erfindungsgemäßen Verfahrens anhand eines Ausführungsbeispiels einer Schaltungsanordnung für n-Bandvertauschung.

In Fig. 2 ist ein Ausführungsbeispiel einer Schaltungsanordnung für ein 5-Bandvertauschungsverfahren gezeichnet.

In den Figuren 3.1 bis 3.19 sind die Frequenzschematas gezeichnet, die an den entsprechenden Punkten der Schaltungsanordnung nach Fig. 2 vorzufinden sind.

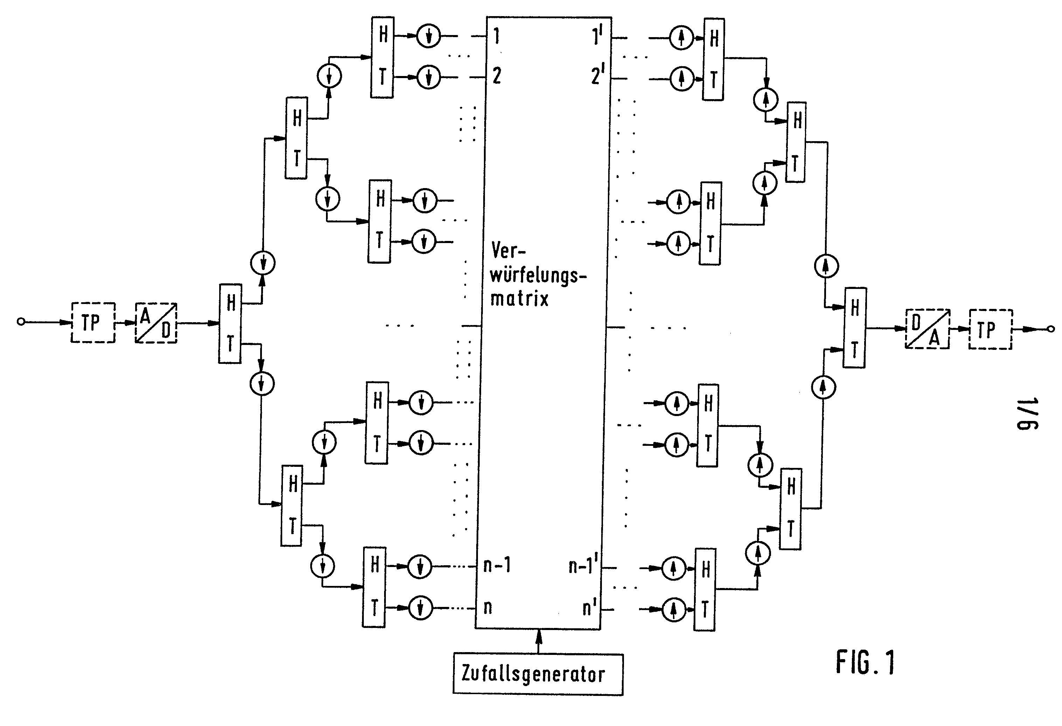

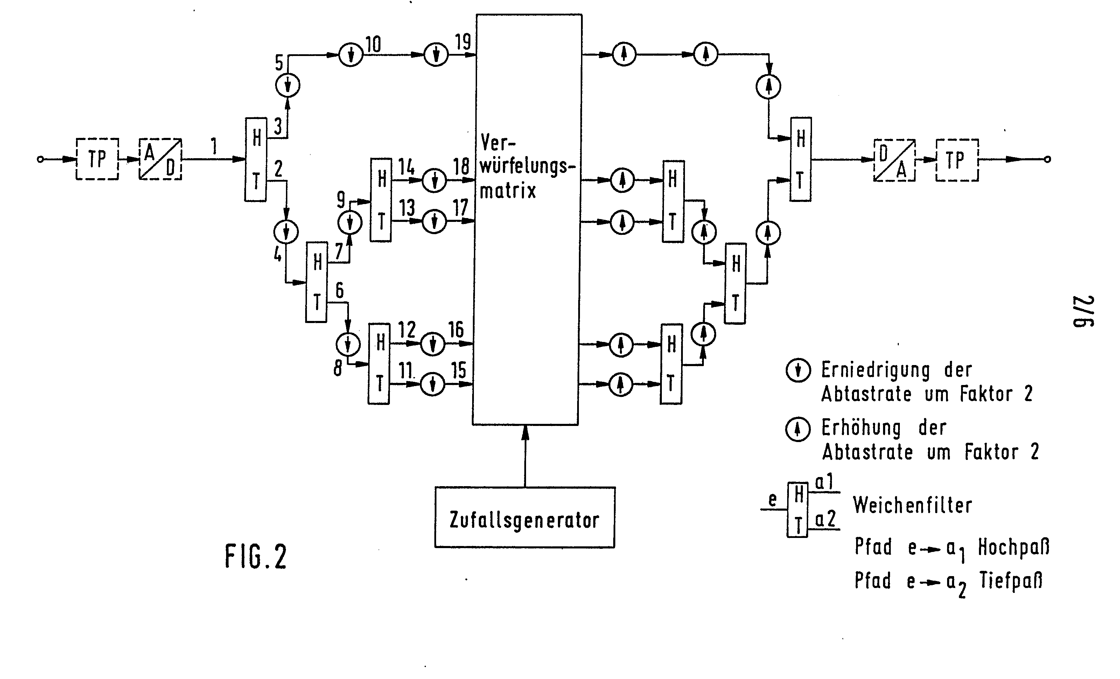

Die in Fig. 1 gezeigte Schaltungsanordnung, die sowohl auf der Sende- als auch auf der Empfangsseite für die n-Bandvertauschung verwendet werden kann, zeigt eingangsseitig einen Tiefpaß TP und einen Analog-Digitalwandler A/D (beide gestrichelt), denen baumartig verzweigend Weichenfilter nachgeschaltet sind, durch welche eine Zerlegung des Signalfrequenzbandes durch fortgesetzte, gleichzeitige Tief- und Hochpaßfilterung in die einzelnen Teilbänder folgt. Nach jeder Filterung wird die Abtastrate erniedrigt. Dies ist in den Figuren 1 und 2 jeweils durch das Symbol ⊕ angedeutet. Durch die stufenweise Reduzierung der Abtastrate wird diese jeweils der Bandbreite des verbleibenden Signals an den Filterausgängen in der Form angepaßt, daß insbesondere, wenn n eine Zweierpotenz ist, also $n = 2^r$ mit $r = 1, 2, 3...$, das Abtasttheorem gerade erfüllt wird. Die baum- oder wurzelartige Verzweigungsschaltung erzeugt an den n Wurzelenden die einzelnen Teilbänder, die mit Hilfe einer Verwürfelungsmatrix entsprechend den Zufallsfolgen eines Zufallsgenerators vertauscht werden. Die an den Ausgängen 1 bis n anstehenden verwürfelten Teilbänder werden anschließend spektral aufsummiert, indem die Abtastfrequenz vor jeder Weichenfilterung erhöht wird (⊕). Diese Aufsummierung erfolgt symmetrisch zur eingangsseitigen Separierung. Das am Ausgang anstehende n-Band-vertauschte Signal wird mittels Digital-Analogwandler D/A und nachgeschaltetem Tiefpaß TP in üblicher Weise in das entsprechende Analogsignal überführt.

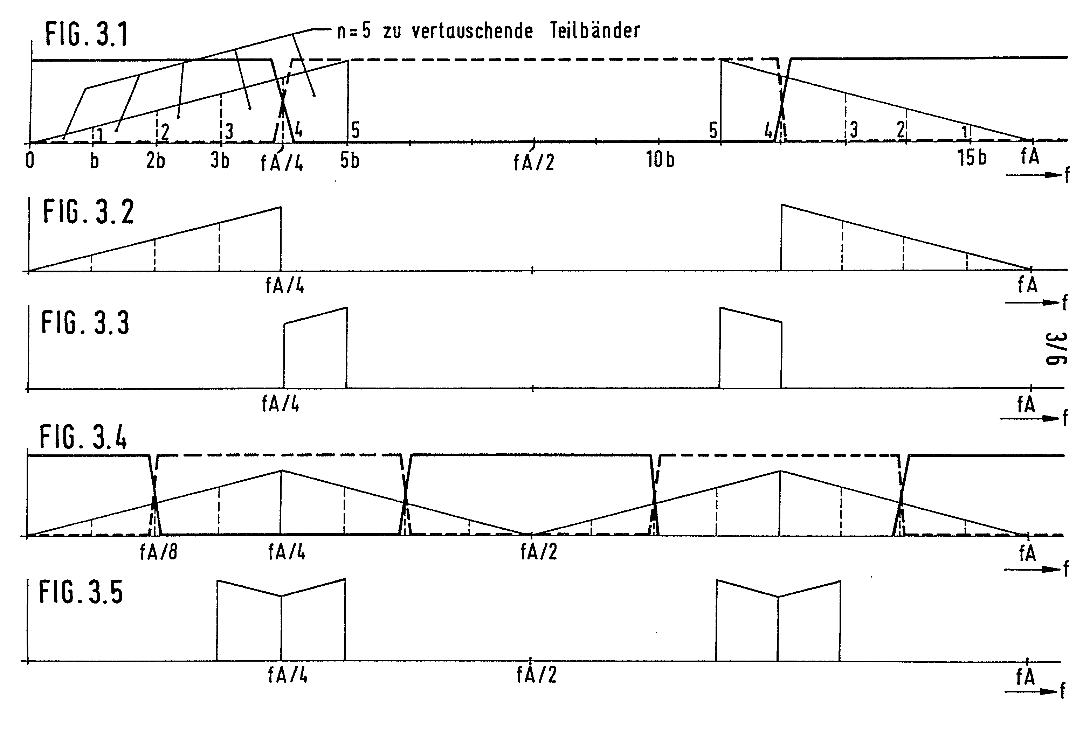

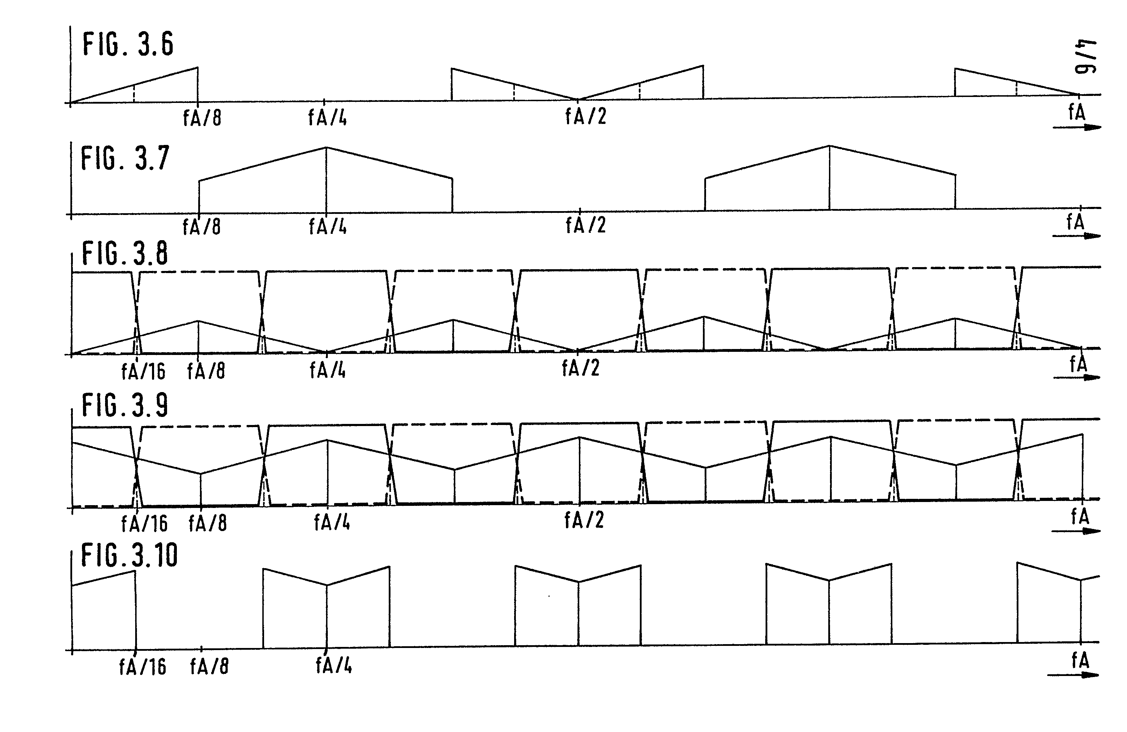

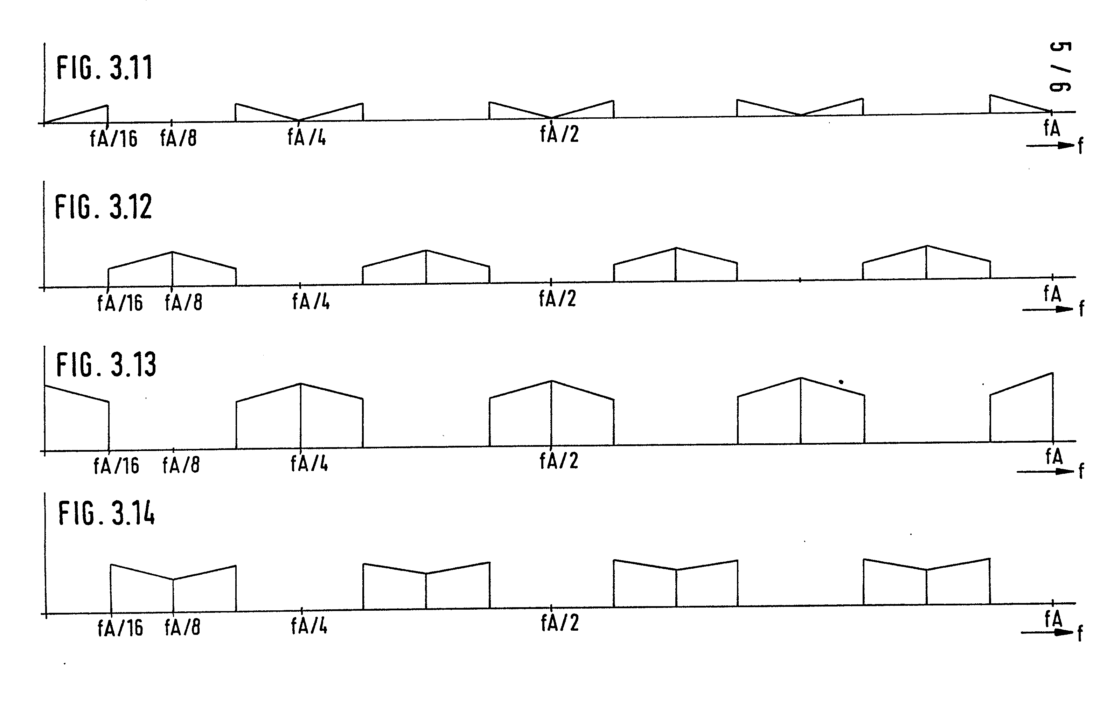

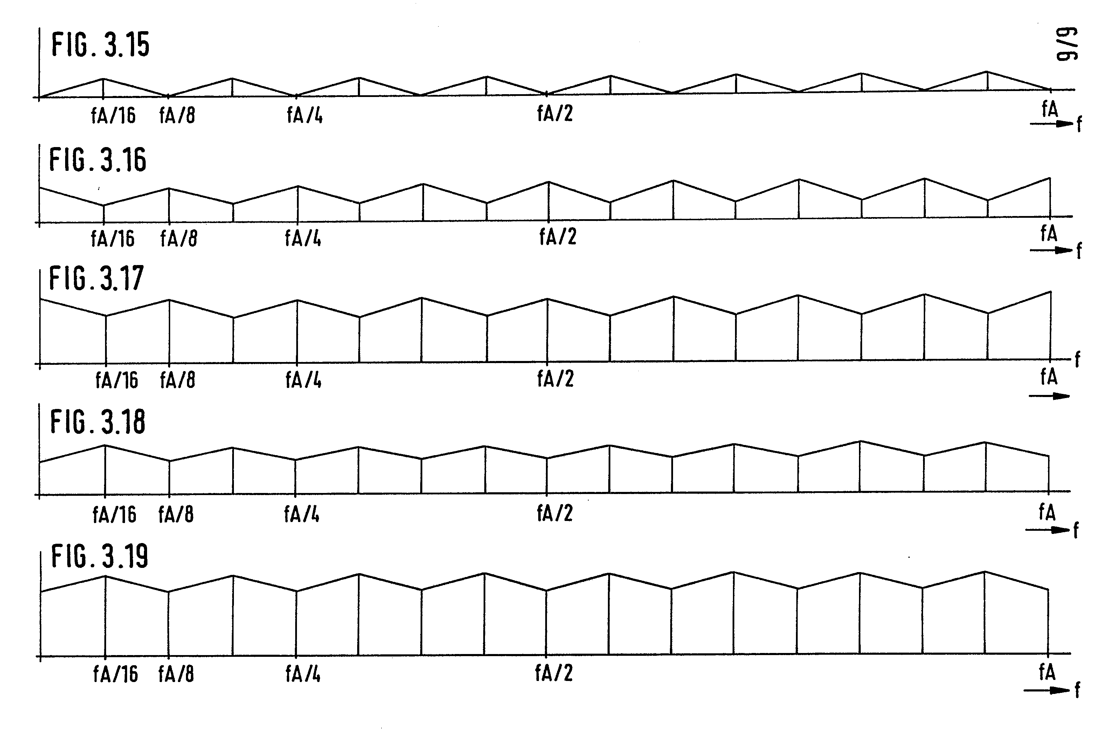

Die Fig. 2 zeigt das gleiche Konstruktionsprinzip der Schaltungsanordnung nach Fig. 1 für den Sonderfall n = 5 Teilbänder der Frequenzbandbreite b im Signalfrequenzbereich 0 bis 5b. Hier ergibt sich eine aufwandsgünstige Realisierung der Schaltungsanordnung, indem die Abtastfrequenz jeweils um den Faktor 2 reduziert wird, wozu es jedoch keiner gesonderten Einrichtung bedarf, sondern lediglich jeder zweite Abtastwert für die weitere Signalverarbeitung herangezogen wird, und indem die Weichenübergänge so ausgelegt sind, daß sie jeweils bei einem Viertel der Abtastrate auftreten. Die mit Ziffern benannten Ein- bzw. Ausgänge der Weichenfilter verweisen auf die gleichlautenden Unternummern der Figur 3, wo die zugehörigen Frequenzschematas dargestellt sind.

- - - - - -

- 1 -

Licentia Patent-Verwaltungs-GmbH     Z13 PTL-BK/Ruf/wei
Theodor-Stern-Kai 1                   BK 80/62
D-6000 Frankfurt 70


Patentansprüche


1. Verfahren zur Vertauschung von n Teilbändern der Frequenzbreite b eines Signalfrequenzbandes mit der unteren und oberen Grenzfrequenz $f_u$ und $f_o$, dadurch gekennzeichnet, daß das Signalfrequenzband mit der Eingangsabtastrate $f_a$ abgetastet wird, daß die n Teilbänder aus dem Signalfrequenzband separiert und jeweils in einen bestimmten Frequenzbereich umgesetzt werden, indem stufenweise mittels Hoch-/Tiefpaß-Weichen (HT) gefiltert und die Abtastrate reduziert wird ($\bigoplus$), daß die Teilbänder anschließend mittels einer von einem Zufallsgenerator gesteuerten Koppelmatrix verwürfelt (Verwürfelungsmatrix) und spektral wieder zur Breite des Signalfrequenzbandes zusammengefaßt werden.


2. Verfahren nach Anspruch 1, dadurch gekennzeichnet, daß die Zusammenfassung der n Teilbänder in umgekehrter Reihenfolge der Verfahrensschritte vor der Verwürfelung erfolgt, indem stufenweise die reduzierten Abtastraten wieder erhöht ($\bigoplus$) und die verwürfelten Teilbänder mittels Weichen (HT) summiert werden.

3. Verfahren nach Anspruch 1, <u>dadurch gekennzeichnet</u>, daß die Umsetzung der n Teilbänder jeweils in die n einzelnen Frequenzbereiche erfolgt und daß die spektrale Zusammenfassung durch den n Ausgängen der Verwürfelungsmatrix nachgeschaltete n Bandpässe mit den einzelnen Frequenzbereichen der n Teilbänder erfolgt.

4. Verfahren nach einem der vorhergehenden Ansprüche, <u>dadurch gekennzeichnet</u>, daß die Eingangsabtastrate $fA = 4 (fu + \mu_o \cdot b)$ beträgt, wobei $\mu_o$ die größte in n enthaltene jedoch n nicht erreichende Zweierpotenz ist, daß in $\log 2\mu_o$ Stufen mit n - 1 Weichen derart gefiltert wird, daß ein baumartig verzweigtes Netzwerk mit n Teilbandausgängen entsteht, daß in den Zweigen der folgenden Stufen, ausgehend von der Eingangsabtastrate fa die Abtastrate stufenweise jeweils durch Halbierung des Terms $\mu_o \cdot b$ reduziert wird (⊕) und daß die Weichenübergangsfrequenz in den folgenden Stufen jeweils ein Viertel der angebotenen Abtastrate beträgt.

5. Verfahren nach Anspruch 2 und 4, wobei der Frequenzbereich des untersten Teilbandes auch die Frequenzen zwischen 0 und fu umfaßt oder wobei die untere Grenzfrequenz fu ein ganzzahliges Vielfaches der Frequenzbreite b beträgt, <u>dadurch gekennzeichnet</u>, daß die stufenweise Reduzierung (⊕) der Abtastrate vor der Verwürfelung und die stufenweise Erhöhung (⊕) nach der Verwüfelung durch Halbierung bzw. Verdoppelung erfolgt.

6. Verfahren nach einem der vorhergehenden Ansprüche, <u>dadurch gekennzeichnet</u>, daß die Hoch-/Tiefpaßweichen (HT) als Wellendigitalfilter realisiert werden.

Verwürfelungsmatrix

Zufallsgenerator

FIG.1

1/6

00656636

FIG.2

**FIG. 3.1**

n=5 zu vertauschende Teilbänder

1  2  3  4  5  ...  5  4  3  2  1

0   b   2b   3b   fA/4   5b   fA/2   10b   15b   fA   → f

**FIG. 3.2**

fA/4   fA   → f

**FIG. 3.3**

fA/4   fA   → f

**FIG. 3.4**

fA/8   fA/4   fA/2   fA   → f

**FIG. 3.5**

fA/4   fA/2   fA   → f

FIG. 3.6

fA/8  fA/4  fA/2  fA

FIG. 3.7

fA/8  fA/4  fA/2  fA

FIG. 3.8

fA/16  fA/8  fA/4  fA/2  fA

FIG. 3.9

fA/16  fA/8  fA/4  fA/2  fA

FIG. 3.10

fA/16  fA/8  fA/4  fA

FIG. 3.11

fA/16  fA/8  fA/4  fA/2  fA  f

FIG. 3.12

fA/16  fA/8  fA/4  fA/2  fA  f

FIG. 3.13

fA/16  fA/8  fA/4  fA/2  fA  f

FIG. 3.14

fA/16  fA/8  fA/4  fA/2  fA  f

5 / 6

0065636

FIG. 3.15

fA/16  fA/8    fA/4          fA/2                              fA
                                                                    f

FIG. 3.16

fA/16  fA/8    fA/4          fA/2                              fA
                                                                    f

FIG. 3.17

fA/16  fA/8    fA/4          fA/2                              fA
                                                                    f

FIG. 3.18

fA/16  fA/8    fA/4          fA/2                              fA
                                                                    f

FIG. 3.19

fA/16  fA/8    fA/4          fA/2                              fA
                                                                    f

## Europäisches Patentamt

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| D,Y | DE-A-2 652 607 (LICENTIA) *Seite 11, letzte Zeile bis Seite 12, Zeile 8; Seite 13, Zeilen 5-18* | 1,4,6 | H 04 K 1/04 |
| Y | TELECOMMUNICATION & RADIO ENGINEERING, Band 32/33, Nr. 5, Mai 1978, Seiten 7-12, Washington (USA); L.M.GOLDENBERG et al.: "Separation of channels from a baseband digital signal in a pulse code modulation frequency-division system". *Seite 7, vorletzte Zeile bis Seite 8, Zeilen 3,23-27; Seite 9, Zeilen 1-3; Seite 10; Zeile 24 bis Seite 11, Zeile 22* | 1,4,6 | |
| A | IEEE INTERNATIONAL CONFERENCE ON COMMUNICATIONS 1977, Band 3, Juni 1977, Seiten 45.4-195 bis 45.4-199, New York (USA); T.A.C.M.CLAASEN et al.: "A generalized scheme for an all digital time division multiplex to frequency division multiplex translator". *Seite 45.4-196, linke Spalte, Zeilen 8-27; Seite 45.4-198, rechte Spalte, Zeilen 29-41; Seite 45.4-199, linke Spalte, Zeilen 36-40* | 2,5 | RECHERCHIERTE SACHGEBIETE (Int. Cl. 3) H 04 K 1/04 H 04 K 1/00 H 04 J 1/18 |

Der vorliegende Recherchenbericht wurde für alle Patentansprüche erstellt.

| Recherchenort DEN HAAG | Abschlußdatum der Recherche 27-08-1982 | Prüfer HOLPER G.E.E. |
|---|---|---|